# EUROPÄISCHE PATENTANMELDUNG

(11) **EP 0 615 112 A1**
(43) Veröffentlichungstag der Anmeldung: **14.09.1994**
(21) Anmeldenummer: 93103708.9
(22) Anmeldetag: 09.03.1993
(51) Int. Cl.: G01F 15/08, B01D 17/02, E21B 43/34

(54) **Verfahren zur Ermittlung der Ergiebigkeit von Wasser/Öl-Emulsionen fördernden Ölbohrungen sowie Testseparator zur Durchführung des Verfahrens**

(71) Anmelder: Klein, Wolfdieter, D-45665 Recklinghausen (DE)
(72) Erfinder: Klein, Wolfdieter, D-45665 Recklinghausen (DE)
(74) Vertreter: Thiel, Christian, Dr. Dipl.-Chem.

(57) **Zusammenfassung**

In einem Verfahren zur Ermittlung der Ergiebigkeit von Wasser/Öl-Emulsionen fördernden Ölbohrungen wird die zu untersuchende Wasser/Öl-Emulsion entgast und in eine erste von drei Kammern, von denen die erste in die zweite und die zweite in die dritte überläuft, in einer solchen Menge eingebracht, bis auch die dritte Kammer wenigstens teilweise gefüllt ist, der dritten Kammer Inhalt entnommen und unter Erwärmung und/oder Zusatz von Emulsionsspalter in die erste Kammer zurückgeführt, bis eine Aufspaltung der gesamten Emulsion in den Kammern in eine wäßrige Phase und eine Ölphase eingetreten ist und werden nach Aufspaltung der Emulsion die Anteile der wäßrigen Phase und der Ölphase bestimmt. Die Erfindung betrifft ferner einen Testseparator zur Durchführung dieses Verfahrens.

## Beschreibung

Die Erfindung betrifft ein Verfahren zur Ermittlung der Ergiebigkeit von Wasser/Öl-Emulsionen fördernden Ölbohrungen sowie einen Testseparator, der insbesondere zur Durchführung dieses Verfahrens geeignet ist. Die Einrichtung kann sowohl stationär als auch fahrbar eingesetzt werden.

Ölbohrungen fördern in zahlreichen Fällen neben Öl und Gas größere Mengen mehr oder weniger salzhaltiges Wasser, das mit dem Öl und in dem Öl enthaltenen Harzen, Paraffinen und Asphaltenen stabile Emulsionen bilden kann.

Solche Emulsionen separieren sich nach der Förderung häufig nur schwer. Neben einer Ölphase und einer Wasserphase können außerordentlich umfangreiche Emulsionsphasen entstehen, deren Grenzschichten zu Öl und Wasser durch Meßverfahren nicht oder nur schwer zu bestimmen sind. Der Öl- respektive Wassergehalt dieser Emulsionen selbst ist ebenfalls mit normalen Meßgeräten nicht bestimmbar. In solchen Fällen ist eine exakte Bilanzierung der Bohrlochergiebigkeit ohne Phasenseparierung nicht möglich.

Zur Bestimmung der Ergiebigkeit einer Ölbohrung und zur Überwachung der Förderung ist es erforderlich, die Ölausbeute über einen definierten Zeitraum festzustellen. Dies erfordert die Spaltung einer etwa erhaltenen Emulsion in die einzelnen Komponenten und deren exakte Vermessung.

Entsprechendes gilt für die Bewertung von Ölfeldern. Bei sich über große Flächen ausdehnenden Ölfeldern mit zahlreichen niedergebrachten Bohrungen in abseits gelegenen Regionen, bereitet dies außerordentliche Schwierigkeiten, insbesondere, wenn weder die benötigte Infrastruktur noch die erforderlichen Einrichtungen an Ort und Stelle zur Verfügung stehen.

Aufgabe der Erfindung ist daher die Bereitstellung sowohl eines Verfahrens als auch einer Vorrichtung, die die Bewertung der Ergiebigkeit von Wasser/Öl-Emulsionen fördernden Ölbohrungen vor Ort ermöglichen. Dazu ist es wünschenswert, daß eine solche Vorrichtung eine überschaubare Größenordnung hat und damit auch transportabel bleibt bzw. das Verfahren einfach mit vor Ort zu installierenden Einrichtungen durchzuführen ist.

Diese Aufgabe wird mit einem Verfahren der eingangs genannten Art gelöst, bei dem die zu untersuchende Wasser/Öl-Emulsion zunächst entgast und in eine erste von drei Kammern, von denen die erste in die zweite und die zweite in die dritte überläuft, in einer solchen Menge eingebracht wird, bis auch die dritte Kammer wenigstens teilweise gefüllt ist, der dritten Kammer Inhalt entnommen wird und unter Erwärmung und/oder Zusatz von Emulsionsspalter in die erste Kammer zurückgeführt wird, bis eine Aufspaltung der gesamten Emulsion in den Kammern in eine wäßrige Phase und eine Ölphase eingetreten ist, und nach Aufspaltung der Emulsion die Anteile der wäßrigen Phase und der Ölphase bestimmt werden.

Das erfindungsgemäße Verfahren ermöglicht eine exakte Vermessung, insbesondere kleiner Ölmengen und erlaubt damit wirtschaftliche Entscheidungen über die Förderung. Zugleich liefert es die Planungsdaten für die Auslegung der Aufbereitungsanlagen.

Bei dem erfindungsgemäßen Verfahren wird das zu untersuchende Wasser/Öl/Gas-Gemisch (Rohöl) nicht in einen abgeschlossenen Behälter (Testseparator) eingebracht. Innerhalb dieses Behälters befinden sich bodenseitig drei Kammern, von denen die erste in die zweite und die zweite in die dritte überläuft. Beim Einbringen in diese Kammer entgast die Mischung und ergießt sich in die erste Kammer, nach deren Auffüllung von dort in die zweite und nach deren Füllung von dort in die dritte. Der Behälter ist so dimensioniert, daß er in seinen Kammern die Produktion einer Ölbohrung über einen längeren Zeitraum, beispielsweise mehrere Stunden bis mehrere Tage, vollständig aufnehmen kann.

Mit der Spaltung der sich auf die Kammer verteilenden Emulsion kann begonnen werden, sobald die dritte Kammer zumindest teilweise gefüllt ist. Dazu wird der dritten Kammer - nach Unterbrechung der Rohölzufuhr - Inhalt entnommen und unter geeigneter Behandlung über den Einlaß in die erste Kammer zurückgeführt. Unter geeigneter Behandlung wird hier die Erwärmung auf eine emulsionsspaltende Temperatur und/oder der Zusatz von emulsionsspaltenden Mitteln verstanden, die zur Ausbildung einer klaren Grenzfläche zwischen wäßriger Phase und Öl führen. In vielen Fällen ist eine bloße Temperaturerhöhung ausreichend, in anderen Fällen die Zugabe geeigneter Emulsionsspalter oder die Kombination beider Techniken.

Durch das kontinuierliche Umpumpen des Inhalts aus der dritten Kammer zurück in die erste unter Behandlung zur Emulsionsspaltung wird nach und nach der gesamte Inhalt des Testseparators in die Behandlung einbezogen und eine Trennung in voneinander getrennte Phasen aus Öl und Wasser erreicht. Dabei sammelt sich das Wasser in erster Linie am Boden der ersten Kammer und ggf. noch als untere Phase in der zweiten Kammer an. Das oben schwimmende Öl läuft über die Trennwände zwischen den Kammern von der ersten in die zweite und von dort in die dritte über. Bei auf das Öl/Wasser-Verhältnis der Bohrung abgestimmten Kammergrößen ist schließlich die dritte Kammer ausschließlich und die zweite Kammer teilweise mit Öl gefüllt.

Während der Betriebszeit des Testseparators in diesen gelangtes Gas sammelt sich im oberen Teil des Behälters oberhalb der nach oben offenen Kammern. Es wird, ggf. nach Entspannung und Aerosolabscheidung über einen Zähler ins Freie oder in eine Leitung abgegeben.

Das am Boden in den drei Kammern gesammelte flüssige Produkt wird über in den einzelnen Kammern angeordnete Auslässe über mit Schiebern versehene Leitungen den für die Messung von Öl und Wasser vorgesehenen Zählern zugeführt und gelangt anschließend in einen Auffangbehälter oder in eine Pipeline. Alternativ zur Vermessung mit Zählern kann auch über Füllstandsanzeiger oder Sonden, die die Lage der Phasengrenzen angeben, vermessen werden.

Die Feststellung des Zustands (Emulsion bzw. getrennte Phasen) in den einzelnen Kammern erfolgt durch geeignete Sonden, beispielsweise solche zur Bestimmung der Leitfähigkeit oder der Dichte. Sofern diese Messung in Abhängigkeit von der Meßhöhe über dem Boden erfolgt, kann über den Füllungsgrad, die bekannten Volumina der Kammern und die Lage der Phasengrenze auf die Menge an Öl und Wasser im geförderten Gemisch geschlossen und direkt die Ölausbeute über die Betriebszeit bestimmt werden. Zu diesem Zweck können die Sonden in der Höhe verstellbar angeordnet sein oder in Abständen zueinander Sensoren aufweisen, die die Leitfähigkeit oder Dichte meßhöhenabhängig ermitteln. Zweckmäßigerweise befinden sich derartige Sonden in allen drei Kammern, jedoch ist es bei geeigneter Auslegung der Kammern ausreichen, wenn eine solche Sonde in der zweiten Kammer vorhanden ist, in der sich eine Phasentrennung zwischen Wasser und Öl ergibt, während die erste Kammer praktisch ausschließlich Wasser aufnimmt und die dritte Kammer praktisch ausschließlich Öl.

Alternativ zur Bestimmung der Ölmenge über die Lage der Phasengrenze zwischen den beiden Phasen kann die Fördermenge wie auch der Anteil an Wasser und Öl konventionell durch Auslaufzähler für die einzelnen Phasen bestimmt werden. In diesem Fall ist es zweckmäßig, am Boden einer jeden einzelnen Kammer einen Auslauf vorzusehen, der über Leitungen mit je einem Zähler für Öl und Wasser verbunden ist. Über eine Qualitätskontrolle gesteuerte Sperrschieber tragen dafür Sorge, daß die jeweilige Phase - Wasser oder Öl - dem dafür vorgesehenen Zähler zugeführt wird.

Das im Förderprodukt enthaltene Gas trennt sich im Testseparator von der flüssigen Phase ab und sammelt sich im oberen Bereich an. Von dort wird es über Ventile an die Umgebung bzw. in ein Leitungssystem abgegeben. Weiteres Gas wird bei der Emulsionsspaltung, etwa durch die dazu erforderliche Temperaturerhöhung, freigesetzt. Bei unter Eigendruck fördernden Quellen ist dabei jeweils eine Entspannung des Gases erforderlich, auch um bei der Messung des Gasvolumens zuverlässige Ergebnisse zu erzielen. Zweckmäßigerweise wird das Gas beim Austritt aus dem Testseparator durch eine Aerosol-Tropfenabscheidung geführt.

Zur Aufspaltung der in den Testseparator gelangten Emulsion wird der Inhalt der dritten Kammer zurück in die erste Kammer geführt und dabei emulsionsspaltenden Maßnahmen unterworfen. Als solche Maßnahmen, die im wesentlichen Auswirkungen auf die Grenzflächenspannung der einzelnen Phasen haben, haben sich die Erhöhung der Temperatur wie auch der Zusatz üblicher emulsionsspaltender Mittel bewährt. Zur Temperaturerhöhung kann die aus der dritten Kammer in die erste Kammer zurückgeführte Emulsion mittels Wärmetauscher aufgeheizt werden. Eine im Testseparator angeordnete Temperaturüberwachung bestimmt dabei in Verbindung mit der Überwachung des Phasenzustands die Temperatur, bei der Phasentrennung eintritt.

Alternativ oder ergänzend hierzu kann der in die erste Kammer zurückgeführten Emulsion ein üblicher Emulsionsspalter zudosiert werden. Auch in diesem Fall werden Temperatur und Phasenzustand in den einzelnen Kammern überwacht und die Phasentrennung in Abhängigkeit von der zudosierten Menge an Emulsionsspalter und ggf. der Temperatur registriert.

Durch die Rückführung des Inhalts der dritten Kammer in die erste Kammer unter gleichzeitiger Einwirkung zur Emulsionsspaltung in Verbindung mit dem bestehenden Gefälle zwischen der ersten und der zweiten sowie der zweiten und der dritten Kammer wird nach und nach der gesamte flüssige Inhalt des Testseparators dieser Einwirkung unterworfen. Mit der Zeit wird der Inhalt der drei Kammern zunehmend in die Behandlung einbezogen und aufgespalten, wobei sich die spezifisch schwerere wäßrige Phase am Boden der ersten Kammer ansammelt und die Ölphase in die zweite und von dort in die dritte Kammer überläuft. Nach Auffüllung der ersten Kammer mit wäßriger Phase sammelt sich ggf. auch in der zweiten Kammer noch wäßrige Phase an, auf der sich eine Ölphase befindet. In der dritten Kammer befindet sich vorzugsweise nur Öl. Bei geeigneter Gestaltung der Volumina der drei Kammern kann erreicht werden, daß sich in der ersten Kammer ausschließlich wäßrige Phase und in der dritten Kammer ausschließlich Ölphase sammelt und sich lediglich in der zweiten Kammer geschichtet zwei Phasen befinden. In diesem Fall ist es ausreichend, die Temperatur und Phasenzustandsüberwachung lediglich in der zweiten Kammer vorzunehmen.

Die Erwärmung und/oder Zudosierung von Emulsionsspaltern in die Rückführung der Emulsion aus der dritten Kammer in die erste erfolgt vorzugsweise kontinuierlich bis zur vollständigen Spaltung der gesamten Emulsion im Testseparator.

Zweckmäßigerweise werden die Daten, die bei der Förderung der Emulsion aus Öl und Wasser, ggf. mit Gas, der Aufspaltung dieser Emulsion und der Mengenvermessung gewonnen werden, zentral erfaßt und abgespeichert, da hierbei wichtige Aufschlüsse für den künftigen Transport und die Verarbeitung des Rohöls wie auch die Erschließung weiterer Bohrungen gewonnen werden können.

Die Erfindung betrifft ferner einen Testseparator zur Ermittlung der Ergiebigkeit von Wasser/Öl-Emulsionen fördernden Ölbohrungen, der insbesondere zur Durchführung des Verfahrens nach Anspruch 1 geeignet ist. Ein solcher Testseparator weist einen Erfassungsbehälter mit einem Einlaß für die zu untersuchende Wasser/Öl-Emulsion und Auslässen für Gas und Flüssigkeiten sowie Einrichtungen zur Erfassung ein- und ausgehender Mengen auf.

Der Erfassungsbehälter selbst ist in drei Kammern und einen Gasraum aufgeteilt, von denen die erste Kammer von der zweiten durch eine erste Trennwand getrennt ist, die einen Teil der Behälterhöhe einnimmt, die zweite Kammer von der dritten durch eine zweite Trennwand, die eine geringere Höhe aufweist, als die erste und der Gasraum oberhalb der drei Kammern angeordnet ist. Der Einlaß für die zu untersuchende Wasser/Öl-Emulsion ist im Bereich der ersten Kammer angeordnet, vorzugsweise im Gasraum oberhalb der ersten Kammer.

Von den drei Kammern weist wenigstens die zweite Kammer Sonden zur Ermittlung des Phasenzustands und der Temperatur auf. Die dritte Kammer ist über eine Rückführung mit dem Einlaß verbunden, wobei in die Rückführung eine Heizeinrichtung und/oder eine Zudosierung für ein emulsionsspaltendes Mittel eingeschaltet ist. Der Testseparator verfügt im übrigen über übliche Sperrschieber und Sicherheitsventile sowie Sonden zur Überwachung von Druck und Temperatur.

Zur Durchführung der Emulsionsspaltung ist die Rückführung für den Inhalt der dritten Kammer über eine Leitung und eine Dosierpumpe mit einem Tank für das emulsionsspaltende Mittel verbunden. Eine mit Sperrschiebern verbundene Regelung ermöglicht dabei die wahlweise Zuspeisung des Emulsionsspalters.

Die in der Rückführung alternativ oder ergänzend dazu vorgesehene Heizeinrichtung ist vorzugsweise ein Wärmetauscher, insbesondere ein Plattenwärmetauscher, der über einen externen Durchlauferhitzer mit Energie versorgt wird.

Das sich im Testseparator oberhalb der drei Kammern ansammelnde Fördergas wird über einen mit einem Zähler verbundenen Gasauslaß ins Freie oder in ein Leitungssystem abgelassen. Dieser Gasauslaß weist zweckmäßigerweise eine Druck- und Temperaturerfassung auf, so daß das Gas vom Zähler druck- und temperaturkorrigiert wird, um eine fehlerarme Erfassung zu ermöglichen. Zweckmäßigerweise ist mit dem Gasauslauf auch ein üblicher Tropfenabscheider vorgesehen, um den Aerosolgehalt des ausgelassenen Gases zu vermindern.

Zweckmäßigerweise weist wenigstens die zweite Kammer eine Sonde zur Ermittlung des Phasenzustands auf. Dabei kann es sich um eine übliche Leitfähigkeitssonde oder eine Sonde zur Bestimmung der Dichte handeln. Vorzugsweise sind derartige Sonden wie auch eine Temperatursonde in allen drei Kammern angeordnet. Bei geeigneter Gestaltung der Sonden zur Ermittlung des Phasenzustandes ist es möglich, über die Leitfähigkeit der Phasen die genaue Lage der Phasengrenze zwischen der wäßrigen und der Ölphase zu ermitteln und über die bekannten Daten des Testseparators hieraus das Förderverhältnis Öl/wäßrige Phase zu bestimmen. Wenn sich in der ersten Kammer praktisch ausschließlich wäßrige Phase und in der dritten Kammer ausschließlich Öl sammelt, reicht es aus, eine solche Sonde in der zweiten Kammer vorzusehen.

Wird die Menge an gefördertem Öl nicht auf die zuvor beschriebene Weise über die Ermittlung der Phasengrenze vermessen, erfolgt dies zweckmäßigerweise über herkömmliche Zähleinrichtungen. Hierzu verfügt jede der Kammern über einen Auslaß mit einer Qualitätskontrolle zur Unterscheidung von Öl und Wasser. Jeder der Auslässe ist dabei zweckmäßigerweise über Leitungen mit je einem Zähler für Öl und Wasser verbunden, wobei die Leitungen über die Qualitätskontrollen steuerbare Schieber aufweisen.

Vorzugsweise verfügt der Testseparator über eine zentrale Datenerfassung für die mit den einzelnen Sonden und Zählern ermittelten Daten.

Der erfindungsgemäße Testseparator ist zweckmäßigerweise transportabel ausgeführt, insbesondere so, daß er auf einem Tieflader auf der Straße oder auf einem Eisenbahnwaggon bewegt werden kann. Er kann aber auch in vorhandene Systeme eingebunden und stationär betrieben werden.

Der erfindungsgemäße Testseparator wird an das Bohrloch angeschlossen und mit Erdölbegleitgas inertisiert und auf den gewünschten Prozeßdruck gebracht. Danach erfolgt die Öffnung zum Bohrloch. Das Gemisch aus Emulsion und Gas wird in die Entgasungszone des Separators geleitet. Die sich zwangsweise bildende große Oberfläche führt zur weitgehenden Entgasung der Flüssigkeit. Das Gas wird über einen Tropfenabscheider druckgeregelt in die Umgebung abgeführt und dabei mittels Meßblende druck- und temperaturkorrigiert vermessen.

Die flüssige Phase der Bohrlochförderung wird über eine vorgegebene Zeit, beispielsweise 24 Stunden, im Testseparator gesammelt. Sie läuft aus der Entgasungszone, beispielsweise über ein Fallrohr, in das Drei-Kammer-Trennungssystems des Separators. Dabei bleibt in der ersten Kammer vorwiegend Wasser und Schmutz zurück, die zweite Kammer füllt sich mit der Mischphase, z.B. Wasser, Emulsion und Öl, und in der dritten Kammer sammelt sich das Öl. Sofern das Bohrloch überwiegend Emulsionen ergibt, können auch alle drei Kammern überwiegend mit Öl/Wasser-Emulsion gefüllt sein. Insoweit gilt es, alle drei Kammern zu überwachen.

Die Überwachung erfolgt in getaktetem zeitlichem Abstand vorzugsweise durch Messung der Leitfähigkeit und der Temperatur sowie des Flüssigkeitsstands in den einzelnen Kammern. Diese Daten ergeben einen genauen Überblick über den Zustand im Testseparator. Das Meßsystem unterscheidet zwischen Öl (Reinphase), Emulsion und Wasser (Reinphase) nach Qualität und Schichtdicke und gibt die Temperatur der jeweiligen Phase an. Da die Messungen in getaktetem zeitlichen Abstand erfolgen, können zeitliche Änderungen im Behälter erfaßt und ausgewertet werden.

Sobald der Seperator mit Rohöl gefüllt ist, erfolgt die Restentgasung der Flüssigkeit und die Spaltung der Emulsion. Dazu wird die Flüssigkeit mittels Pumpe durch einen Wärmetauscher gepumpt und dort aufgeheizt, etwa auf 50 bis 85° C, in der Regel auf etwa 65° C. Dies ist insbesondere dann erforderlich, wenn das Öl mit recht niedrigen Temperaturen von beispielsweise 3 bis 40°C übernommen wird und damit seine Viskosität und Dichte für die Trennung als auch für die Spaltung der Emulsion ungünstig sein können.

In den Flüssigkeitsumlauf bzw. die Rückführung wird öl- oder vorzugsweise wasserlöslicher Emulsionsspalter mit einer Pumpe über eine Mischstrecke eindosiert. Der Emulsionsspalter wirkt über die Konzentration auf die Emulsion ein und spaltet sie. Diese Spaltung wird durch die Temperaturerhöhung gefördert, zusätzlich bewirkt sie eine größere Spreizung der Dichten und somit eine Beschleunigung des Absetzvorgangs. Durch die Aufheizung der Flüssigkeit wird zudem der Dampfdruck des Öles so weit erhöht, daß die Restentgasung in den Gasraum stattfinden kann. Der gesamte Vorgang wird über Meßsonden zeitabhängig gemessen. Dadurch kann das Verfahren zeitlich überwacht und kontrolliert werden.

Nach Abschluß der Emulsionsspaltung erfolgt die Vermessung der Öl- und Wassermengen über Meßsonden oder Zähler. Befinden sich in den einzelnen Kammern mehrere Phasen, so erfolgt über die Qualitätskontrollen an den Kammerauslässen eine automatische Überwachung des Ausflusses und Sortierung von Öl und Wasser auf die einzelnen Zähler.

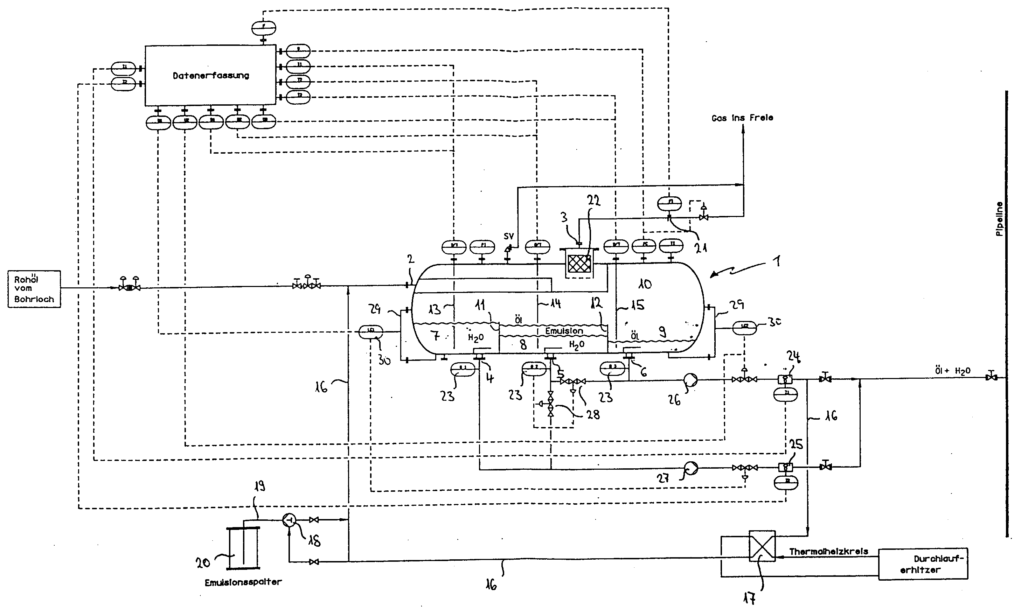

Die Erfindung wird durch die beiliegende Abbildung eines Testseparators mit bevorzugten Ausführungsformen einzelner Merkmale näher erläutert.

Die Abbildung zeigt den Testseparator 1 mit einem Einlaß 2 für das Rohöl vom Bohrloch und Auslässen 3 für das aus dem Rohöl freigesetzte Gas und 4 bis 6 für abgeschiedene Flüssigkeit. Im Inneren des Testseparators 1 befinden sich drei Kammern 7, 8, 9, die durch zwei Trennwände 11 und 12 voneinander getrennt sind. Die Trennwände 11 und 12 erstrecken sich nur über einen Teil der Höhe des Separators 1, wobei die Trennwand 11 zwischen den Kammern 7 und 8 etwas höher ist als die Trennwand 12 zwischen den Kammern 8 und 9. Da das über den Einlaß 2 in den Testseparator gelangende Rohöl zuerst in die erste Kammer 7 gelangt, ist durch die unterschiedliche Höhe der Trennwände 11 und 12 sichergestellt, daß das Rohöl bzw. die Öl/Wasser-Emulsion aus der Kammer 7 zunächst in die Kammer 8 überläuft und von dort in die Kammer 9. Über den Kammern befindet sich der Gasraum 10, aus dem das freigesetzte Gas über den Auslaß 3 ins Freie abgegeben wird.

Eine jede der Kammern 7, 8 und 9 verfügt über eine in den unteren Bereich der Kammer ragende Meßsonde 13, 14, 15, die die dort in der flüssigen Phase herrschenden Leitfähigkeitsverhältnisse und Temperaturen mißt. Alternativ zur Leitfähigkeit kann auch die Dichte bestimmt werden. Beide Größen geben eindeutige Auskunft über die Qualität der dort angesammelten Flüssigkeit.

Die dritte Kammer 9 ist über den Auslaß 6 und eine Pumpe 26 mit einer Umlauf- oder Rückführleitung 16 verbunden, die - nach Befüllung des Testseparators mit Rohöl und Schließen des Ventils zum Bohrloch - den Inhalt der Kammer 9 zum Einlaß 2 des Testseparators 1 führt. Der rückgeführte Inhalt der Kammer 9 gelangt von dort in die erste Kammer 7, von wo er sich über die Trennwand 11 in die zweite Kammer 8 und von dort über die Trennwand 12 weiter in die dritte Kammer 9 ergießt.

Im Verlauf der Rückführleitung 16 befindet sich ein Wärmetauscher 17, der über einen elektrischen Durchlauferhitzer und einen Thermalheizkreis beheizt wird. Hier wird der Umlauf auf eine gewünschte Temperatur gebracht, die geeignet ist, die Spaltung der Emulsion im Separator 1 zu fördern.

Im weiteren Verlauf der Rückführung 16 mit einer speziellen Mischeinrichtung für Additive befindet sich eine Dosierpumpe 18, mit der über eine Leitung 19 Emulsionsspalter aus dem Behälter 20 zudosiert werden kann. Die Zudosierung kann über in den Leitungen angeordnete Ventile wahlweise zugeschaltet werden. Aus der Leistung der Dosierpumpe und der Betriebszeit bzw. aus dem Flüssigkeitsstand im Behälter 20 vor Beginn und nach Ende der Zudosierung ist es möglich, die zur Emulsionsspaltung benötigte Menge an Emulsionsspalter genau zudefinieren.

Durch die Temperaturerhöhung während der Emulsionsspaltung und das ständige Umpumpen wird in der flüssigen Phase verbliebenes Gas freigesetzt, das über den Gasauslaß 3 ins Freie abgegeben wird. In der Regel ist es zweckmäßig, die Menge an freigesetztem Gas mit Hilfe eines Zählers 21 druck- und temperaturkontrolliert zu bestimmen. Um Aerosole aus der Gasphase abzuschalten, kann ein Aerosol- und Tropfenabschalter 22 am Auslaß 3 vorgesehen sein.

Nach Aufspaltung der Emulsion im Separator 1 werden die flüssigen Phasen mengenmäßig bestimmt. Dies erfolgt durch Auslaufzähler 24 und 25, denen das in den Kammern 7, 8 und 9 vorhandene Öl und Wasser über die Auslässe 4, 5 und 6 mit den Pumpen 26 und 27 zugeführt wird. An jedem der Auslässe 4, 5 und 6 befindet sich eine Qualitätskontrolle 23, die sicherstellt, daß die in der jeweiligen Kammer befindliche Phase auch dem richtigen Zähler für Öl bzw. für Wasser zugeführt wird. Insbesondere für die Kammer 8 ist die Qualitätskontrolle mit einem Schiebersystem 28 gekoppelt, daß, je nachdem, ob Öl oder Wasser aus der Kammer 8 ausschließt, den Weg zum Ölzähler 24 oder zum Wasserzähler 25 freigibt.

Mit Hilfe der Sonden 13, 14 und 15 in den einzelnen Kammern ist es möglich, zwischen Öl, Wasser und Emulsion zu unterscheiden. Bei geeigneter Anordnung der Sensoren ist gleichzeitig eine Feststellung der Lage der Phasengrenze zwischen Öl und Wasser in der Kammer 8 und die Befüllungshöhe mit Öl in der Kammer 9 möglich. Auf diese Weise kann bereits aus den Daten im Testseparator eine erste Abschätzung der Mengenverteilung von Öl und Wasser vorgenommen werden. Zur genaueren Bestimmung wird aber die Vermessung über Auslaufzähler vorzuziehen sein. In jedem Fall kann auch die Zerfallgeschwindigkeit bei verschiedenen Betriebsparametern bestimmt werden, was für die Auslegung der Aufbereitungsanlagen von Bedeutung ist.

Im Bereich der Kammern 7 und 9 befinden sich zudem Steigleitungen 29 mit angeschlossen Meßfühlern 30, womit der Füllungsstand der Kammern 7 und 9 und die Qualität der darin befindlichen Flüssigkeit bestimmt werden kann. Die Meßfühler 30 sind über Signalleitungen mit Schiebern in den zu den Zählern 24 und 25 führenden Leitungen verbunden, so daß diese Schieber geschlossen oder geöffnet werden können, je nach dem, was die in der entsprechenden Kammer befindliche Qualität der flüssigen Phase (Öl oder Wasser) verlangt. Hierdurch ergibt sich eine zusätzliche Kontrolle zur Qualitätskontrolle 23 an den Auslässen dieser Kammer.

Die mit den Meßsonden 13, 14 und 15, den Zählern 21, 24 und 25 sowie den Meßfühlern 30 erfaßten Daten werden zentral in einer Datenerfassung gesammelt und ausgewertet. Entsprechendes gilt für die im Testseparator 1 über Druckfühler gemessenen Druckwerte und ggf. die Menge an eingespeistem Emulsionsspalter. Auf diese Weise ist eine zentrale Steuerung möglich, die den Rückführprozeß, die Aufheizung und die Zudosierung von Emulsionsspalter unterbricht, sobald sich die Emulsion gespalten hat und den Auslaufvorgang aus den Kammern 7, 8 und 9 sowie die Verteilung von Öl und Wasser auf den Ölzähler 24 und den Wasserzähler 25 steuert.

## Patentansprüche

1. Verfahren zur Ermittlung der Ergiebigkeit von Wasser/Öl-Emulsionen fördernden Ölbohrungen, dadurch gekennzeichnet, daß man die zu untersuchende Wasser/Öl-Emulsion entgast und in eine erste von drei Kammern, von denen die erste in die zweite und die zweite in die dritte überläuft, in einer solchen Menge einbringt, bis auch die dritte Kammer wenigstens teilweise gefüllt ist, der dritten Kammer Inhalt entnimmt und unter Erwärmung und/oder Zusatz von Emulsionsspalter in die erste Kammer zurückführt, bis eine Aufspaltung der gesamten Emulsion in den Kammern in eine wäßrige Phase und eine Ölphase eingetreten ist, und nach Aufspaltung der Emulsion die Anteile der wäßrigen Phase und der Ölphase bestimmt.

2. Verfahren nach Anspruch 1, dadurch gekennzeichnet, daß wenigstens in der zweiten Kammer Leitfähigkeit und/oder Dichte des Inhalts, ggf. in Abhängigkeit von der Meßhöhe über dem Boden, bestimmt werden.

3. Verfahren nach Anspruch 2, dadurch gekennzeichnet, daß die wäßrige und die Ölphase über die Füllhöhen der einzelnen Kammern und die Lage der Phasengrenzen der gespaltenen Öl/Wasser-Emulsion vermessen werden.

4. Verfahren nach einem der Ansprüche 1 oder 2, dadurch gekennzeichnet, daß die wäßrige und die Ölphase durch Auslaufzähler vermessen werden.

5. Verfahren nach Anspruch 4, dadurch gekennzeichnet, daß der Inhalt der Kammern beim Auslaufen kontinuierlich auf seine Qualität (Wasser bzw. Öl) hin überwacht und dem dafür vorgesehenen Auslaufzähler zugeführt wird.

6. Verfahren nach einem der vorstehenden Ansprüche, dadurch gekennzeichnet, daß das Gas nach Aerosol/Tropfenabscheidung druck- und temperaturkorrigiert vermessen wird.

7. Verfahren nach einem der vorstehenden Ansprüche, dadurch gekennzeichnet, daß die Emulsion aus der dritten Kammer bei der Rückführung erwärmt wird, vorzugsweise durch Wärmetausch, und ihr ein emulsionsspaltendes Mittel zugesetzt wird.

8. Verfahren nach Anspruch 7, dadurch gekennzeichnet, daß die Erwärmung und/oder Versetzung mit Emulsionsspalter dosiert und kontinuierlich bis zur vollständigen Spaltung der gesamten Emulsion erfolgt.

9. Verfahren nach einem der vorstehenden Ansprüche, dadurch gekennzeichnet, daß wenigstens in der zweiten Kammer die Temperatur überwacht wird.

10. Verfahren nach einem der vorstehenden Ansprüche, dadurch gekennzeichnet, daß die Betriebsdaten zentral erfaßt und ausgewertet werden.

11. Testseparator zur Ermittlung der Ergiebigkeit von Wasser/Öl-Emulsionen fördernden Ölbohrungen, insbesondere zur Durchführung des Verfahrens nach Anspruch 1, mit einem Erfassungsbehälter (1), einem Einlaß (2) für die zu untersuchende Wasser/Öl-Emulsion und Auslässen für Gas (3) und Flüssigkeiten (4, 5, 6) sowie Einrichtungen zur Erfassung ein- und ausgehender Mengen, dadurch gekennzeichnet, daß der Erfassungsbehälter drei Kammern (7, 8, 9) und einen Gasraum (10) aufweist, von denen die erste Kammer (7) von der zweiten (8) durch eine erste Trennwand (11) getrennt ist, die einen Teil der Behälterhöhe einnimmt, die zweite Kammer (8) von der dritten (9) durch eine zweite Trennwand (12) getrennt ist, die eine geringere Höhe aufweist als die erste, und der Gasraum (10) oberhalb der drei Kammern (7, 8, 9) angeordnet ist, der Einlaß (2) für die zu untersuchende Wasser/Öl-Emulsion im Bereich der ersten Kammer (7) angeordnet ist, wenigstens die zweite Kammer (8) Sonden (13, 14, 15) zur Ermittlung des Phasenzustands und der Temperatur aufweist, und die dritte Kammer (9) über eine Rückführung (16) mit dem Einlaß (2) verbunden ist, wobei in die Rückführung (16) eine Heizeinrichtung (17) und/oder eine Zudosierung (18) für ein emulsionsspaltendes Mittel eingeschaltet ist.

12. Testseparator nach Anspruch 11, dadurch gekennzeichnet, daß die Rückführung (16) über eine Leitung (19) und eine Dosierpumpe (18) mit einem Tank (20) für ein emulsionsspaltendes Mittel verbunden ist.

13. Testseparator nach Anspruch 11 oder 12, dadurch gekennzeichnet, daß die Heizeinrichtung (17) ein Wärmeaustauscher, vorzugsweise einen Plattenwärmetauscher, ist.

14. Testseparator nach einem der Ansprüche 11 bis 13, dadurch gekennzeichnet, daß der Einlaß (2)im Gasraum oberhalb der ersten Kammer (7) angeordnet ist.

15. Testseparator nach einem der Ansprüche 11 bis 14, dadurch gekennzeichnet, daß der Gasauslaß (3) eine Druck- und Temperaturerfassung (21) aufweist.

16. Testseparator nach einem der Ansprüche 11 bis 15, dadurch gekennzeichnet, daß am Gasauslaß (3) einen Tropfenabscheider (22) vorgesehen ist.

17. Testseparator nach einem der Ansprüche 11 bis 16, dadurch gekennzeichnet, daß die wenigstens eine Sonde zur Ermittlung des Phasenzustands eine Leitfähigkeitssonde (13, 14, 15) ist.

18. Testseparator nach Anspruch 17, gekennzeichnet durch Sonden (13, 14, 15) zur Erfassung der Temperatur und der Leitfähigkeit in allen drei Kammern (7, 8, 9).

19. Testseparator nach Anspruch 18, gekennzeichnet durch Sonden (13, 14, 15) zur Messung des Leitfähigkeitprofils zur Ermittlung der Lage der Phasengrenze und des Temperaturprofils in wenigstens der zweiten Kammer (8).

20. Testseparator nach einem der vorstehenden Ansprüche, dadurch gekennzeichnet, daß jede der Kammern (7, 8, 9) einen Auslaß ( 4, 5, 6) mit einer Qualitätskontrolle (23) zur Unterscheidung von Öl und Wasser aufweist.

21. Testseparator nach Anspruch 20, dadurch gekennzeichnet, daß jeder der Auslässe (4, 5, 6) über Leitungen mit je einem Zähler für Öl (24) und Wasser (25) verbunden ist, wobei die Leitungen die über die Qualitätskontrollen (23) steuerbare Schieber aufweisen.

22. Testseparator nach einem der Ansprüche 11 bis 21, gekennzeichnet durch eine zentrale zeitabhängige Datenerfassung.

23. Testseparator nach einem der Ansprüche 11 bis 22 in fahrbarer Ausführung.
